Europäisches Patentamt

European Patent Office

Office européen des brevets

(19)

(11) **EP 1 217 347 A2**

(12) **EUROPÄISCHE PATENTANMELDUNG**

(43) Veröffentlichungstag:
    **26.06.2002 Patentblatt 2002/26**

(51) Int Cl.⁷: **G01J 5/62**

(21) Anmeldenummer: **01123715.3**

(22) Anmeldetag: **04.10.2001**

(84) Benannte Vertragsstaaten:
    **AT BE CH CY DE DK ES FI FR GB GR IE IT LI LU
    MC NL PT SE TR**
    Benannte Erstreckungsstaaten:
    **AL LT LV MK RO SI**

(30) Priorität: **21.12.2000 DE 10063824**

(71) Anmelder: **Zeiss Optronik GmbH
    73447 Oberkochen (DE)**

(72) Erfinder: **Becht, Hubert
    88515 Langenenslingen (DE)**

(74) Vertreter: **Gnatzig, Klaus
    Carl Zeiss
    Patentabteilung
    73446 Oberkochen (DE)**

(54) **Strahlungsempfänger mit aktivem optischen Schutzsystem**

(57)     Strahlungsempfänger mit einem Photodetektor und einem Sensor, wobei der Sensor (11) die Strahlungsintensität aufnimmt und ein vor dem Photodetektor (22) angeordneter Shutter (19) in Abhängigkeit von der detektierten einfallenden Strahlungsintensität angesteuert wird. Dabei wird die einfallende Strahlung über eine vor dem Shutter (19) angeordnete Verzögerungseinrichtung (15) dem Photodetektor (22) zugeführt wird, so daß aufgrund der Ansteuerung des Shutters keine den Shutter zerstörende Strahlung den Shutter erreichen kann und gegebenenfalls vom Shutter abgehalten bzw. absorbiert wird..

FIG.1

**Beschreibung**

Die Erfindung betrifft Strahlungsempfänger mit einem Photodetektor und einem Sensor sowie ein Verfahren zum Betreiben desselben und ein Entfernungsmeßgerät mit einem derartigen Strahlungsempfänger.

Aus der US 4,288,158 ist ein Laserceilometer mit einer Vorrichtung zur Reduzierung der von dem Laserceilometer emittierten Strahlung bekannt. Sobald die Ausrichtung des Laserceilometers über ein vorbestimmtes Winkelmaß von der vertikalen Position abweicht, wobei das Winkelmaß von einem Sensor detektiert wird, wird die vom Laserceilometer emittierte Strahlung reduziert. Dadurch wird gewährleistet, daß eine vom Laserceilometer ausgehende Strahlungsintensität, durch die das menschliche Auge in Mitleidenschaft gezogen werden könnte, nicht mehr emittiert wird, sobald die Ausrichtung des Laserceilometers von der vertikalen Position über das vorbestimmte Maß abweicht, womit die Möglichkeit besteht, daß Strahlung des Laserceilometers ins menschliche Auge gelangen kann.

Aus der DE 43 25 139 C1 ist ein Verfahren zur Vermeidung von Augenschädigungen beim Einsatz von Hochleistungslasem bekannt. Bei diesem Verfahren, bzw. bei der aus dieser Schrift bekannten Vorrichtung, wird der Strahlung eines Hochleistungslaser die Strahlung eines Warnlasers überlagert. Die Strahlungsintensität des Warnlasers wird derart gesteigert, daß bei einem Betrachter, aufgrund der von den Warenlaser abgegeben Strahlungsintensität, das Augenlid zum Schließen angeregt wird, bevor eine für die Augen des Betrachters schädliche Strahlungsintensität vom Hochleistungslaser abgegeben wird.

Aus der US 4, 552, 454 ist ein System und eine Methode, insbesondere zum Testen von Laserentfernungsmessem bekannt. Bei diesem System zum Testen von Laserentfernungsmessem wird die von einem Sender abgegebene Strahlung zunächst in eine Vorrichtung mit reflektierenden Oberflächen eingekoppelt. Durch diese Vorrichtung wird die Strahlung auf einen Strahleneingang einer Glasfaser fokussiert, wobei diese Glasfaser mittig und endseitig mit reflektierenden Flächen versehen ist. Die Strahlung wird an diesen reflektierenden Flächen zumindestens zum Teil reflektiert und über das mit reflektierenden Flächen versehene System zu einem Empfänger geleitet. Durch diese Anordnung kann eine Eichung des Entfernungsmessers, aufgrund des bekannten Wegunterschiedes zwischen der mittig in der Faser und der endseitig an der Faser vorgesehenen reflektierenden Fläche, durchgeführt werden.

Weiterhin sind Entfernungsmeßgeräte bekannt, die als Strahlungsquelle einen Laser aufweisen, wobei die Entfernung anhand der rückreflektierten Strahlung bestimmt wird. Dafür wird die rückreflektierte Strahlung einem Strahlungsempfänger zugeordnet.

Da die Empfänger heutiger Entfernungsmesser außerordentlich kleinflächig sind, um eine hohe Detektionsempfindlichkeit zu erreichen, tritt die Problematik der optischen Zerstörung in heutigen Entfernungsmessern immer häufiger auf. Die Empfängerfläche hat Durchmesser von teilweise nur noch 70 μm. Die Empfangsoptik eines solchen Entfernungsmessers ist so gestaltet, daß die gesamte, innerhalb des Sehfeldes auf die Eintrittsapertur treffende Strahlung, auf den Empfänger gebündelt wird. Damit können schon sehr geringe Strahlungsleistungen, bzw. Strahlungsdichten in der Eintrittsapertur, zu einer optischen Zerstörung des Detektors führen. Eine besondere Gefährdung geht insbesondere von der von dem Entfernungsmesser selbst ausgesandten hohen Pulsspitzenleistung aus, die im Megawattbereich liegen kann. Reflektionen des Sendestrahls an nahe beim Gerät stehenden, rückreflektierenden Zielen oder Zielen mit hohem Retroreflektionsanteil führen in der Regel zur Zerstörung des Empfängers.

Auch die im Gerät selbst erzeugte Strahlung kann aufgrund von Rückstreuungen bei ungünstigen Verhältnissen zur Zerstörung von Gerätekomponenten führen.

Der Erfindung liegt die Aufgabe zugrunde, einen Strahlungsempfänger und ein Verfahren zum Betreiben desselben bereitzustellen, so daß eine Zerstörung von Gerätekomponenten, insbesondere des Photodetektors durch Eigen- und Fremdstrahlung verhindert ist.

Weiterhin lag der Erfindung die Aufgabe zugrunde, einen Strahlungsempfänger bzw. ein Entfernungsmeßgerät mit einem Strahlungsempfänger bereitzustellen, der nach einem für den Strahlungsempfänger schädlichen Strahlungseingang umgehend für den Meßbetrieb wieder zur Verfügung steht.

Die Aufgabe der Erfindung wird durch die im Patentanspruch 1 und 6 gegebenen Merkmale gelöst.

Durch die Maßnahme eine Vergrößerungseinrichtung vorzusehen kann gewährleistet werden, daß ein vor dem Photodetektor des Strahlungsempfängers angeordneter Shutter geschlossen ist, bevor die in den Strahlungsempfängers eingefallene Strahlung mit Passieren des Shutters den Photodetektor ungehindert erreichen kann. Zur Bestimmung der Strahlungsintensität der einfallenden Strahlung ist ein Sensor vorgesehen, der derart angeordnet ist, daß ein möglichst schnelles Schließen des Shutters erreicht werden kann.

Es hat sich als vorteilhaft herausgestellt zur Bestimmung der Strahlungsintensität einen Bruchteil, vorzugsweise weniger als 5 %, von der eingefallenen Strahlung abzukoppeln und dem Sensor 11 zuzuführen. Für das Abkoppeln hat sich insbesonders ein Strahlteiler als vorteilhaft herausgestellt.

Wird die eingefallene Strahlung, insbesondere mittels einer Sammeloptik, in eine Lichtleitfaser eingekoppelt, so bietet sich zum Abzweigen von einem Bruchteil der Strahlungsintensität eine Faserabzweigung an. Die Verwendung von Lichtleitfasern ist vorteilhaft, da eine Störung von seitlich in den Strahlengang einfallenden Gegenständen verhindert ist und eine nicht geradlinige Leitung der Strahlung einfach möglich ist, was sich vorteilhaft auf den erforderlichen Platzbedarf auswirkt.

Es hat sich als vorteilhaft herausgestellt als Verzögerungseinrichtung eine Lichtleitfaser vorzusehen. In solchen Lichtleitfasern kann Strahlung unter geringen Verlusten geführt werden. Auch ist es möglich die Lichtleitfaser in gebogener Form anzuordnen ohne daß damit erhebliche Strahlungsverluste verbunden sind. Die Strahlung kann somit unter geringen Verlusten in der Lichtleitfaser geführt werden. Die Möglichkeit die Strahlung auf gebogenen Bahnen führen zu können trägt massiv zur Kompaktheit des Strahlungsempfängers bei.

Es hat sich als vorteilhaft herausgestellt, einen Shutter, der eine elektrooptische Substanz aufweist, einzusetzen. Durch Änderung eines angelegten Potentials ändern solche elektroopitschen Substanzen, wie z. B. Flüssigkeiten und insbesondere Kristalle, schnell ihre optischen Eigenschaften und zeichnen sich somit durch eine kurze Reaktionszeit aus.

Es hat sich als vorteilhaft herausgestellt, einen Shutter vorzusehen, der einen Filter mit veränderbarem Absorptionsverhalten oder mehrere Filter, mit unterschiedlichen Absorptionsverhalten umfaßt. Damit ist es möglich in Abhängigkeit von der detektierten Strahlungsintensität die eingefallene Strahlung durch Shutter bzw. durch Wahl des entsprechenden Shutters derart zu dämpfen, daß die den Photodetektor erreichende Strahlung die max. zulässige Intensität nicht überschreitet. Durch Rückmeldung vom Shutter an eine dem Photodetektor zugeordnete Auswerteelektronik, wird bei der Auswertung der erhaltenen Daten der durch den Shutter bedingte Dämpfüngsgrad berücksichtigt. Damit wird der Einsatzbereich des Strahlungsempfänger erheblich vergrößert.

Es hat sich als Vorteilhaft herausgestellt, als Verzögerungseinrichtung ein Lichtleitfaser vorzusehen.

Weitere vorteilhafte Maßnahmen sind in weiteren Unteransprüchen beschrieben. Im folgenden wird die Erfindung anhand eines Ausführungsbeispiels näher beschrieben. Es zeigt:

Figur 1:    schematische Darstellung eines Entfernungsmessers mit einem Strahlungsempfängers;

Figur 2:    schematische Darstellung des Verfahrens bei einem Entfernungsmesser und

Figur 3:    schematische Darstellung eines elektrooptischen Shutters

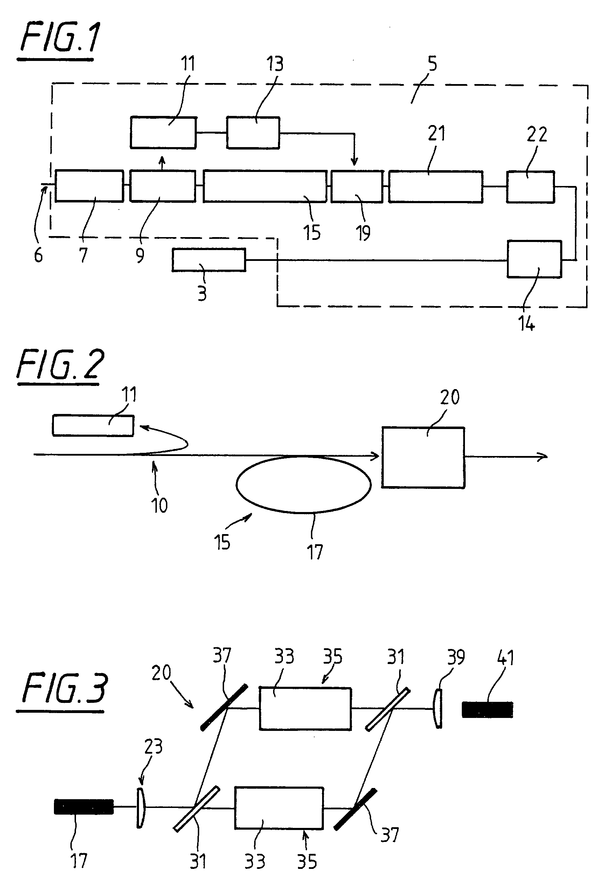

Der in Figur 1 schematisch dargestellte Strahlungsempfänger 5 umfaßt eine Sammeloptik 7, durch die die Strahlung eines Strahlungseingangs 6 bzw. der Eingangsapertur gesammelt wird. Durch diese Sammeloptik 7 wird ein Eingangsstrahl generiert. Von diesem Eingangsstrahl wird ein Teil der Strahlung mittels eines Strahlteilers 9 oder mittels einer Faserverzweigung 10, wie in Figur 2 dargestellt, einem Sensor 11 zugeführt. Die Signale dieses Sensors 11 werden an eine Steuerung 13 weitergeleitet, durch die die Strahlungsintensität des Eingangsstrahls ermittelt wird.

Überschreitet der durch die Steuerung 13 ermittelte Wert der Intensität des Eingangsstrahls einen vorbestimmten Wert einer für den Photodetektor maximal zulässigen Strahlungsintensität, so wird ein Shutter 19 zum Schließen angesteuert. Es ist eine Reaktionszeit zwischen dem Strahlungseingang mit der Sensierung der Strahlungsintensität bis zum Schließen des Shutters 19 gegeben. Damit gewährleistet werden kann, daß keine für den Photodetektor 22 schädliche Strahlungsintensität zum Photodetektor 22 gelangen kann, wird der Teil des Eingangsstrahl, der nicht dem Sensor 11 zugeführt worden ist, in eine Verzögerungseinrichtung 15, hier Lichtleitfaser 17, eingekoppelt. Für das Transmittieren der Lichtleitfaser 17 wird mindestens eine Mindestzeit, die mindestens der Reaktionszeit entspricht, benötigt. Da die Reaktionszeit, davon abhängig ist, wie lange das System benötigt, um eine hohe Strahlungsintensität zu detektieren und den Shutter 19 zu schließen, ist auch die Mindestzeit von diesen Geräteparametern abhängig.

Es kann vorgesehen sein, daß ein Absorber als Teil des Shutters eingeschwenkt wird, durch den die Strahungsintensität auf ein für den Photodetektor 22 zulässiges Maß reduziert wird. Es kann auch vorgesehen sein, daß in Abhängigkeit von der detektierten Strahlungsintensität erst ein im Strahlengang bzw. vor dem Photodetektor 22 angeordneter Absorber entsprechend aktiviert wird.

Weiterhin kann auch vorgesehen sein, die Strahlung aus dem Strahlungsempfänger 5 auszukoppeln, z. B. durch einen schaltbaren Spiegel, bevor die Strahlung auf den Photodetektor 22 gelangen kann.

Ist der Shutter 19 geöffnet, so passiert der aus der Lichtleitfaser 17 austretende Lichtstrahl den Shutter 19 und wird vorzugsweise über eine Transformationsoptik 21, dem Photodetektor 22 zugeführt. Die Transformationsoptik 21 ist optional und es ist auch möglich, daß die den Shutter 19 passierende Strahlung direkt auf den Photodetektor 22 fällt. Die vom Photodetektor 22 generierten Signale werden einer Auswerteelektronik 14 zugeführt. Wird der Strahlungsempfänger 5 in einem Entfernungsmeßgerät 1 eingesetzt, so ist als Strahlungsquelle dem Strahlungsempfänger 5 ein Laser 3 zugeordnet. Es kann vorgesehen sein , daß dieser Laser 3 ebenfalls durch die Auswerteelektronik 14 angesteuert wird. Es kann auch vorgesehen sein, daß die Steuerung 13 Bestandteil der Auswerteelektronik 14 ist.

Anhand von Figur 2 wird ein Verfahren zum Schutz des Strahlungsempfängers 5, insbesondere eines Entfernungsmessers 1, anhand von konkreten Werten beschrieben. Bei den näher angegebenen Werten der Leistungen und Zerstörschwellen handelt es sich um Beispielswerte, die nicht einschränkend zu verstehen sind. Anhand dieser Beispielwerte soll ein Eindruck vermittelt werden, wie eine Realisierung aussehen kann und wie weitreichend die damit verbundene Schutzfunktion ist.

Hinter der Sammeloptik wird an der Stelle, an der üblicherweise der Photodetektor stehen würde, ein Lichtleiter angeordnet. Bei dem in Figur 2 dargestellten Ausführungsbeispiel ist der Sensor 11 hinter einer Faserverzweigung angebracht worden. Durch diese Faserverzweigung 10 wird dem Sensor 11 mit 1% der Strahlungseingangsleistung beaufschlagt. Es ist aber auch möglich den Sensor direkt im freien Strahlengang insbesondere im Eingangsbereich vorzusehen.

Die verbleibende Strahlungsleistung von 99% des Eingansstrahls gelangt über die längere Lichtleitfaser 17, die als Verzögerungseinrichtung 15 fungiert, zu einem elektrooptischen Shutter 20. Dieser elektrooptische Shutter 20 wird anhand von Figur 3 beschrieben. Hinter dem elektrooptischen Shutter 20 befindet sich der nicht mehr dargestellte Photodetektor des Entfernungsmessers.

Im folgenden werden die folgenden Daten zugrunde gelegt:

- Sendepulsdauer:        3 ns,
- Energie des Sendelaserpulses:        ca. 20 mJ,
- Zerstörungsschwelle des Fasermaterials:        1,5 GW/cm$^2$
- Zerstörungsschwelle des elektrooptischen Shutters:        100 MW/cm$^2$
- Zerstörungsschwelle des Empfängers:        500 Watt Pulsspitzenleistung
- Schaltzeit bzw. Reaktionszeit (Verzögerung zwischen dem Eintritt von Strahlungsintensität oberhalb der zulässigen Pulsspitzenleistung und dem Schließen des elektrooptischen Shutters):        50 ns
- Pulsspitzenleistung des Sendelasers        ca. 7 MW.

Als Eintrittsfaser wird für eine gute Signaltransmission eine Stufenindexfaser verwendet. Der Faserquerschnitt wird so dimensioniert, daß die volle Sendepulsleistung auf die Faser fallen darf, ohne eine Zerstörung auszulösen.

Aus der Zerstörschwelle des Fasermaterials und der Sendepulsleistung erhält man mit

$$I_{max} = \frac{P_{max}}{0{,}25 * \Pi * d^2} \qquad \Rightarrow d = \sqrt{\frac{4 \times P_{max}}{I_{max} \times \Pi}}$$

bei 7 MW Sendepulsleistung einen minimal erforderlichen Faserdurchmesser von ca. d = 770 µm, wobei $I_{max}$ die Pulsspitzenleistung des Sendelasers und $P_{max}$ die Zerstörschwelle des Fasermaterials ist. Bei der Ermittlung der 770µm ist angenommen worden, daß sich die Lichtleistung homogen über die Faser verteilt.

Solche Fasern sind als Standartbauteile am Markt erhältlich. Die zulässigen Biegeradien betragen dabei herstellerspezifisch ca.30 cm. Durch Tempern lassen sich langzeitstabile Biegeradien unter 10 cm reichen.

Die nominale Bandbreite solcher Stufenindexfasern liegt üblicherweise bei ca. 10 MHz/km. Die Faserdämpfung liegt bei ca. 0,008 dB/m. Der Brechungsindex n des Kerns (Cores) aus Quarz beträgt bei 1575 nm ca. n=1,44. Die numerische Apertur liegt bei ca. 0,22.

Für die Gewährleistung einer Verzögerungszeit von $\Delta t \approx 50$ ns muß die Länge der Faserverzögerungsleitung ca. $l$ = 10m betragen. Es gilt:

$$C_n = \frac{c}{n} \qquad \text{mit c = Lichtgeschwindigkeit} \approx 3 \times 10 \; \frac{8m}{Sec}$$

$$h = \text{Brechungsindex des Fasermaterials}$$

$$= 1{,}44$$

Mit den Faserdaten aus unserem Ausführungsbeispiel erhält man

$$BW_{Faser} (l) = \frac{BW_{Faser}}{l_{Faser}}$$

$$\Delta\tau = \frac{0{,}3 - 0{,}5}{BW}$$

eine Pulsverbreiterung von etwa 0,5 ns über die Strecke von 10 m, wobei $BW_{Faser}$ die Bandbreite ist und $1_{Faser}$ die Länge der Faser in Km ist. Die Verzögerungseinrichtung bzw. die Lichtleitfaser beeinträchtigt die aufgrund der geringen Länge der Faser in km betrachtet das Signal kaum.

Die Faserverzweigung ist derart ausgelegt, daß 1 % der Eingangsstrahlung zum Sensor 11 geleitet wird. Damit muß der Sensor 11 bereits auf eine Leistung von 5 W ansprechen. Solche Sensoren, die auf eine derart hohe Ansprechschwelle reagieren, sind als Standartbauteile kostengünstig erhältlich. Beispielsweise kann eine sehr schnelle Photodiode mit kleiner aktiver Fläche und einer Pulsanstiegszeit < 0,5 ns verwendet werden.

Mit einem Comparator wird die Ansprechschwelle des Sensors 11 in ein digitales Triggersignal für den elektrooptischen Shutter umgesetzt. Bei solch einer Anordnung beträgt die durch den Sensor 11 bedingte Reaktionszeit wenige ns.

Der in Figur 3 dargestellte elektrooptische Shutter sperrt auf das Triggersignal des Sensors 11 hin das Signal zum Photodetektor.

Mit der Zerstörschwellle des elektrooptischen Shutters von 1/15 der Zerstörschwelle der Faser muß der aus der Faser heraustretende Strahl auf einen Strahl mit einem um den Faktor 4 größeren Strahldurchmesser aufgeweitet werden. Es gibt:

$$\frac{P_{\max}}{P_{\max\,Shutter}} = \frac{1{,}5\ GW}{100\ MW} = \frac{r^2}{(0{,}5\times 770\,nm)^2} \Rightarrow r \approx 1{,}52\ mm$$

Als elektrooptische Substanzen bzw. als elektrooptische Kristalle körmen beispielsweise zwei Lithiumniobadkristalle mit je 3,1 mm freier Apertur eingesetzt werden.

Die zulässige Transmission $T_{Shutter}$ bei gesperrtem Shutter sollte $T_{Shutter} < 0{,}7 \times 10^{-4}$ betragen, so daß die Zerstörschwelle des Photodetektors durch die durch den Shutter hindurchtretende Strahlung nicht erreicht wird.

$$P_{\max,\ Sensor} \geq T_{Shutter}\ x\ P_{\max}; T_{Shutter} < \frac{500\,Watt}{7\,MWatt}$$

Die Transmission bei geöffneten elektrooptischen Shutter kann im Bereich von T > 80 % liegen.

Die elektrooptischen Kristalle können so eingebaut werden, daß der elektrooptische Shutter ohne das Anliegen eines elektrischen Feldes über die Kristalle vollständig geschlossen ist. Mit der Schußfreigabe des Entfernungsmessers wird dann ein elektrisches Feld so über die Kristalle gelegt, daß eine Polarisationsdrehung um 90° erreicht wird und der elektrooptische Shutter vollständig transparent wird. Auf das Triggersignal vom Sensor 11 hin werden die Feldelektroden auf Masse heruntergezogen und nach dem Verschwinden der bedrohenden Lichtleistung wieder auf das Nennpotential hochgeregelt.

Da der Schaltvorgang nur mit einer geringen Umladung verbunden ist und im Mittel daher praktische keine Leistung benötigt wird, kann die Hochspannungsversorgung und Schaltung sehr stark miniaturisiert werden. Mit vertretbarem Aufwand sind Schaltzeiten im Bereich weniger ns erreichbar. Nach Verschwinden der bedrohenden Lichtleistung kann der elektrooptische Shutter nach wenigen dutzend ns wieder vollständig geöffnet sein.

Der in diesem Ausführungsbeispiel beschriebene Strahlungsempfänger und das vorgestellte Verfahren sollte mit den im folgenden aufgelisteten Komponenten einen zuverlässigen Schutz des Empfängers eines Laserentfernungsmessers für in die Empfangspupille eingestrahlte Pulsspitzenleistung von bis zu 7 Megawatt bieten. Die Schutzfunktion ist als völlig autonome Einheit konfiguriert und benötigt minimalen internen elektronische Schaltungsaufwand.

Idealerweise könnte die gesamte Optik und Elektronik einschließlich des Warnempfängers in einem hermetisch abgeschlossenem Gehäuse, das ca. die Größer einer Streichholzschachtel hat, integriert werden. Lediglich die Faserverzögerungsleitung wäre extern zu verlegen. Die in diesem Ausführungsbeispiel verwendeten Komponenten sind:

1. Stufenindexlichtleitfaser 17, ca. 770 μm Kerndurchmesser, ca. 10 m Länge.

2. PIN-Photodiode mit Comparator für den Sensor 11.

3. Angespleiste Faserverzweigung 10 zum Sensor 11.

4. Faserkollimator 23 und Fasereinkopplung 39.

5. Zwei bis vier Dünnfilmpolarisatoren 31.

6. Zwei Umlenkspiegel 37.

7. Zwei elektrooptische Kristalle 35 oder eloktooptische Substanzen 33 für den Pockelseffekt mit ca. 3 mm Durchmesser.

8. Hochspannungsversorgung und Schalter für die elektroopitschen Kristalle 35.

9. Miniaturisiertes Gehäuse zur Integration aller Komponenten ohne Faserverzögerungsleitung.

Bezugszeichenliste:

| | |
|---|---|
| 1. | Entfernungsmeßgerät |
| 3. | Strahlungsquelle/Laser |
| 5. | Strahlungsempfänger |
| 6. | Strahlungseingang/Eintrittsapertur |
| 7. | Sammeloptik |
| 9. | Strahlteiler |
| 10. | Faserverzweigung |
| 11. | Sensor |
| 13. | Steuerung |
| 14. | Auswerteelektronik |
| 15 | Verzögerungseinrichtung |
| 17. | Lichtleitfaser |
| 19. | Shutter |
| 20. | Elektrooptischer Shutter |
| 21. | Transformationsoptik |
| 22. | Photodetektor |
| 23. | Kollimator |
| 25. | Polarisator |
| 27. | s-polarisierte Strahlung |
| 29. | p-polarisierte Strahlung |
| 31. | Polarisator |
| 33. | Optische aktive Substanz |
| 35. | elektroopitscher Kristall |
| 37. | Umlenkspiegel |
| 39. | Fasereinkoppeloptik |

**Patentansprüche**

1. Strahlungsempfänger mit einem Photodetektor und einem Sensor, **dadurch gekennzeichnet, daß** der Sensor (11) die Strahlungsintensität aufnimmt, wobei ein vor dem Photodetektor (22) angeordneter Shutter (19) in Abhängigkeit von der detektierten einfallenden Strahlungsintensität angesteuert wird und wobei die einfallende Strahlung über eine vor dem Shutter (19) angeordnete Verzögerungseinrichtung (15) dem Photodetektor (22) zugeführt wird.

2. Strahlungsempfänger nach Anspruch 1, **dadurch gekennzeichnet, daß** als Verzögerungseinrichtung (15) eine Lichtleitfaser (17) vorgesehen ist.

3. Strahlungsempfänger nach Anspruch 1, **dadurch gekennzeichnet, daß** mittels eines Strahlteilers (9) dem Sensor (11) ein Bruchteil der einfallenden Strahlung, insbesondere weniger als 5 %, zugeführt wird.

4. Strahlungsempfänger nach mindestens einem der vorangegangen Ansprüche, **dadurch gekennzeichnet, daß** eine Sammeloptik (7) zum Fokussieren der einfallenden Strahlung vorgesehen ist.

5. Strahlungsempfänger nach Anspruch 1, **dadurch gekennzeichnet, daß** der Shutter mindestens einen strahlungsabsorbierenden Filter umfaßt.

6. Verfahren nach Anspruch 5, **dadurch gekennzeichnet, daß** der Shutter eine Mehrzahl an Filtern mit unterschiedlichem Absorptionsverhalten umfaßt.

7.  Verfahren nach Anspruch 5 oder 6, **dadurch gekennzeichnet, daß** als Filter eine elektrooptische Substanz vorgesehen ist.

8.  Entfernungsmesser mit einem Laser als Strahlungsquelle (3), der einen Strahlungsempfänger (5) gemäß mindestens einem der vorangegangenen Ansprüche umfaßt.

9.  Verfahren zum Betreiben eines Strahlungsempfängers, gemäß mindestens einem der vorangegangen Ansprüche **dadurch gekennzeichnet, daß** mittels eines Sensors die einfallende Strahlungsintensität detektiert wird und eine Steuereinrichtung (13) bei Überschreitung eines vorbestimmten Grenzwertes ein vor einem Photodetektor (22) angeordneter Shutter (19) zum Schließen ansteuert. Wobei die einfallende Strahlung in eine Verzögerungseinrichtung (15) eingekoppelt wird und aus dieser nach einer vorbestimmten Mindestzeit heraustritt und nach Passieren des Shutters (19) auf den Photodetektor (22) trifft.

10. Verfahren nach Anspruch 9, **dadurch gekennzeichnet, daß** in Abhängigkeit von der sensierten Strahlungsintensität entsprechend der erfinderischen Reduzierung ein Filter ausgewählt wird und im Strahlengang positioniert wird.

_FIG.1_

_FIG.2_

_FIG.3_